# EUROPÄISCHE PATENTSCHRIFT

(11) **EP 2 160 266 B1**
(45) Veröffentlichungstag und Bekanntmachung des Hinweises auf die Patenterteilung: **29.07.2015**
(21) Anmeldenummer: 08773276.4
(22) Anmeldetag: 26.06.2008
(51) Int. Cl.: B23K 26/14, B23K 26/26, B23K 26/30

(54) **Verfahren zum Verbinden dickwandiger metallischer Werkstücke mittels Schweissen**
Thick-walled metal workpieces connecting method using welding
Procédé d'assemblage par soudure de pièces métalliques à parois épaisses

(30) Priorität: 26.06.2007 DE 102007030050; 24.06.2008 DE 102008029724
(43) Veröffentlichungstag der Anmeldung: 10.03.2010
(73) Patentinhaber: Vallourec Deutschland GmbH, 40472 Düsseldorf (DE)
(72) Erfinder: KEITEL, Steffen, 06120 Halle (DE); NEUBERT, Jan, 06114 Halle (DE); SCHELLER, Wolfgang, 47918 Tönisvorst (DE); LIEDTKE, Markus, 45731 Waltrop (DE); CAESAR, Christian, 46244 Bottrop (DE)
(74) Vertreter: Meissner, Peter E.
(86) Internationale Anmeldenummer: PCT/DE2008/001063
(87) Internationale Veröffentlichungsnummer: WO 2009/000259

(56) Entgegenhaltungen:
- EP-A- 1 160 046
- EP-A- 1 900 472
- WO-A-2005/056230
- FR-A- 2 634 577

## Beschreibung

Die Erfindung betrifft ein Verfahren zum Verbinden dickwandiger metallischer Werkstücke mittels Schweißen, insbesondere von Rohren aus Stahl, gemäß dem Oberbegriff des Patentanspruches 1 wie es im EP 1 160 046 A1 beschrieben wird.

Neben dem Verbinden von Rohren ist das erfindungsgemäße Schweißverfahren dabei ebenso anwendbar für beispielsweise das Verbinden dickwandiger Bleche oder Hohlprofile mit unterschiedlichen Dicken und Querschnitten oder zum Verbinden von Durchdringungen von Rohren oder Hohlprofilen.

Insbesondere betrifft die Erfindung Rohre mit Wanddicken von mehr als 8 mm bzw. 15 mm, die mittels verschiedener Schweißverfahren, wie beispielsweise dem Laserstrahlschweißen und Lichtbogenschweißen, miteinander z. B. zu Rohrleitungen verbunden werden.

Das Laserstrahlschweißen von Rohren ist allgemein bekannt und es gab stets Bemühungen, den Nahtquerschnitt gegenüber den konventionellen Schweißverfahren, wie dem Lichtbogenhandschweißen oder dem Metallschutzgasschweißen (MSG), deutlich zu verringern und die Schweißzeiten durch höhere Schweißgeschwindigkeiten zu verkürzen, um so die Wirtschaftlichkeit zu verbessern.

Nachteilig war jedoch, dass die für das Laserstrahlschweißen notwendigen Nahtvorbereitungen und Toleranzen bislang nicht mit den Randbedingungen bei der Herstellung von Rohrsträngen für die Verlegung von Rohrleitungen in Übereinstimmung gebracht werden konnten.

Bekannt ist auch, dass mittels Laserstrahlschweißen in unterschiedlichen Positionen ohne komplizierte Parameteranpassung gute Schweißergebnisse erreicht werden können, da die Schweißnähte bei diesem Schweißverfahren durch ein großes Verhältnis von Tiefe zur Breite der Naht gekennzeichnet sind. Dies konnte jedoch bislang wegen der Toleranzanforderungen bei der Herstellung von Rohrleitungen nicht genutzt werden.

Ein Laserstrahlschweißverfahren zur Herstellung von Verbindungen dickwandiger Rohre ist z. B. aus der DE 199 50 437 C2 bekannt. Dort wird ein Verfahren beschrieben, bei dem die zu verbindenden Rohrenden mit zwei Schweißbereichen versehen sind. Im ersten Schweißbereich stoßen die Enden stumpf aneinander, der zweite Schweißbereich, der sich daran anschließt, ist V-förmig ausgebildet. Die aneinander stoßenden Enden werden mittels Laserstrahlschweißung miteinander verbunden, beim zweiten V-förmigen Bereich wird mindestens ein Zusatzwerkstück eingelegt, das mit den gegenüber liegenden Seiten der aneinander stoßenden Werkstückenden jeweils durch eine Schweißnaht verbunden wird und die teilweise aneinander stoßenden Bereiche der Werkstückenden werden mit einer weiteren Schweißnaht verbunden.

Nachteil dieses Verfahren ist, dass ein zusätzliches Werkstück notwendig ist, das der jeweilige Fugenform angepasst werden muss. Durch diesen Aufwand erhöhen sich die Fertigungszeit und damit die Herstellungskosten der Rohrverbindung.

Außerdem ist aus der WO 2005/056230 A1 das Orbitalschweißen von Rohren zu Rohrleitungen bekannt, bei dem das Laserstrahlschweißen wahlweise mit einem Metallschutzgas- (MSG-) Schweißprozess zu einem Laser-MSG-Hybridschweißprozess kombiniert wird. Bei einem solchen Hybridschweißprozess wirken gleichzeitig der Laserstrahl und der Lichtbogen des MSG-Schweißprozesses auf die Schweißstelle ein.

Wie diese Schweißverfahren im Hinblick auf die hohen qualitativen und wirtschaftlichen Anforderungen an die Schweißverbindungen von Rohrsträngen für die Rohrverlegung eingesetzt werden und welche Nahtvorbereitungen dabei erforderlich sind, wird nicht beschrieben.

Allgemein bekannt ist es, beim Schweißen dickwandiger Werkstücke ein oder mehrere Schweißköpfe gleichzeitig oder auch zeitlich versetzt zu verwenden. Um den gesamten Nahtquerschnitt zu füllen wird in mehreren Lagen geschweißt. Außerdem ist es notwendig, fallweise die Schweißparameter während des Schweißens den jeweiligen Schweißpositionen anzupassen.

Aufgrund der Größe der Schmelzbäder beim MSG-Schweißen müssen die Schweißparameter in Abhängigkeit von den Schweißpositionen angepasst werden. Fallweise sind Pendelbewegungen des Schweißbrenners vorzusehen. Da die Nahtwurzel und die erste Schweißlage besonders hohen Qualitätsansprüchen genügen müssen, werden diese Nahtbereiche häufig auch mittels Lichtbogenhandschweißen oder Wolfram-Inertgasschweißen (WIG) hergestellt. Nachteil dieser Schweißverfahren ist die sehr geringe Schweißgeschwindigkeit.

Aufgrund der beschriebenen Toleranzanforderungen an eine Laserschweißverbindung dickwandiger Rohre und wegen des bislang nicht gelösten Problems, mit technisch beherrschbaren und wirtschaftlich umsetzbaren Laserleistungen eine qualitativ einwandfreie und wirtschaftliche Schweißverbindung bei einer minimalen Anzahl von Schweißbereichen und Schweißlagen herzustellen, hat das Schweißen dickwandiger Werkstücke wie z. B. von Rohren mittels Laser- bzw. Laserhybridverfahren bislang keine Bedeutung.

Als wirtschaftlicher Nachteil hat sich bei der Anwendung des Laserstrahlschweißens auch herausgestellt, dass ca. 15 - 20 % der eingebrachten Laserleistung aufgrund der durch den Fügespalt transmittierenden Laserstrahlung nicht mehr für den eigentlichen Schweißprozess zur Verfügung steht.

Einen weiteren wichtigen Faktor zur Etablierung innovativer Prozesse, wie dem Laserstrahlschweißen im Bereich der Rohrverlegung, stellt die Qualität und die Stabilität der Wurzelausbildung der Schweißnaht dar, wobei mit dem bekannten Laserschweißverfahren diese Anforderungen bislang nicht erfüllt werden konnten.

Die Ausbildung der Wurzel hat wesentlichen Einfluss auf die mechanisch-technologischen Eigenschaften, insbesondere auf die Dauer- und Schwingfestigkeit der Schweißverbindung. Ziel ist hier eine möglichst kerbfreie Wurzel mit geringer Nahtüberhöhung und gleichmäßiger Ausbildung zu realisieren.

Aufgabe der Erfindung ist es, das Laser- bzw. Laser-Lichtbogen-Hybridschweißen zum Verbinden von dickwandigen Werkstücken, insbesondere von Rohren mit Wanddicken > 8 mm, insbesondere > 15 mm, dahingehend zu verbessern, dass unter Berücksichtigung der qualitativen Anforderungen an die Schweißverbindung eine hohe Wirtschaftlichkeit des Schweißprozesses mit einer minimalen Anzahl an Schweißbereichen und Schweißlagen erreicht wird.

Diese Aufgabe wird ausgehend vom Oberbegriff in Verbindung mit den kennzeichnenden Merkmalen des Anspruches 1 gelöst. Vorteilhafte Weiterbildungen sind Bestandteil von Unteransprüchen.

Nach der Lehre der Erfindung wird die Schweißverbindung durch eine Kombination aus zwei oder mehreren unterschiedlichen Schweißverfahren hergestellt, die wanddickenabhängig mit höchstens drei Schweißbereichen hergestellt werden, wobei im Hinblick auf die hohen qualitativen Anforderungen an die Schweißverbindung und hohe Schweißleistung der erste Schweißbereich (Wurzel) mittels Laserstrahlschweißen oder Laser-Lichtbogen-Hybridschweißen, der zweite Schweißbereich mittels Laser-Lichtbogen-Hybridschweißen und der blechdickenabhängig fallweise erforderliche dritte Schweißbereich mittels Laser-Lichtbogen-Hybridschweißen oder allein durch Lichtbogenschweißen hergestellt wird wobei bei drei Schweißbereichen der zweite Schweißbereich alternativ auch mittels alleinigem Lichtbogenschweißen verschweißt wird. Die Schweißbereiche werden dabei jeweils mit einer Schweißlage oder mehreren Schweißlagen gefüllt, wobei die Ein- oder Mehrkopftechnik zur Anwendung kommt. Beim Einsatz der Mehrkopftechnik können die Schweißköpfe gleichzeitig oder zeitlich versetzt zum Einsatz kommen.

Die auf das jeweils angewandte Schweißverfahren abgestimmte Nahtvorbereitung wird so vorgenommen, dass für den ersten Schweißbereich ein I-Stoß mit einem maximalen Spalt von 3 mm, für den zweiten Schweißbereich eine V- oder tulpenförmige Nahtvorbereitung und für den dritten Schweißbereich eine V- oder tulpenförmige Nahtvorbereitung mit einem im Vergleich zur V-förmigen Nahtvorbereitung des zweiten Schweißbereichs verringerten Winkel bei einer V-förmigen Nahtvorbereitung vorgesehen wird. Beim Einsatz des Laser-Lichtbogen-Hybridschweißens beträgt dabei der Leistungsanteil des Lasers an der momentanen Schweißleistung mindestens 10%.

Nach umfangreichen Untersuchungen ist es mit dem erfindungsgemäßen Verfahren jetzt erstmals gelungen, die Vorzüge des Laserstrahlschweißens für die Herstellung von Rohrverbindungen zu nutzen und mit technisch beherrschbaren und wirtschaftlich umsetzbaren Laserleistungen eine sichere Rohrverbindung bei einer minimalen Anzahl an Schweißbereichen und Schweißlagen herzustellen.

Die Nahtvorbereitung ist im Hinblick auf die Anforderungen des Laser- bzw. Laser-Lichtbogen-Hybridschweißens so optimiert, dass unter Ausnutzung der wirtschaftlichen Vorteile dieser Verfahren optimale Schweißergebnisse erzielt werden.

Als wichtiger Schritt zur Etablierung innovativer Schweißprozesse, wie dem Laserstrahlschweißen oder dem Laser-Lichtbogen-Hybridschweißen, beispielsweise im Bereich der Rohrverlegung, ist es nun durch eine Optimierung der Schweißspaltgeometrie in Bezug auf die Anforderungen des Laserstrahl- bzw. Laser-Lichtbogen-Hybridschweißens ebenfalls gelungen, die Qualität und Stabilität der Wurzelausbildung so zu optimieren, dass höchste Anforderungen erfüllt werden bei gleichzeitiger Nutzung des hohen Leistungspotentials des Laserschweißprozesses.

Fallweise kann es zudem vorteilhaft sein, den Laserstrahl oszillierend beim Schweißen zu bewegen, um damit das gleichmäßige Ausformen der Wurzel zu unterstützen.

Ebenso ist es für einen den gestellten Anforderungen entsprechend optimierten Schweißprozess möglich, die Laserleistung während des Schweißprozesses zu variieren. Desweiteren bietet das erfindungsgemäße Verfahren für die Prozessoptimierung die vorteilhafte Möglichkeit, die Fokuslage des Laserstrahls und die Position des Laserstrahls bezogen auf die zu verschweißenden Stoßflächen der Schweißbereiche variiert werden kann.

Hierbei sind die Nahtvorbereitungsvarianten durch Eigenschaften gekennzeichnet, die sowohl den typischen Eigenschaften einer reinen Laserstrahlschweißung wie auch der Kopplung zwischen Laserstrahl und Lichtbogen im weiteren Lagenaufbau Rechnung tragen.

Damit werden die Bereiche der notwendigen mechanischen oder thermischen Anarbeitung minimiert und der Aufwand für diesen Bearbeitungsschritt entsprechend reduziert. Die daraus resultierende Schweißfugengeometrie kann als laserstrahlgerechter Engspalt bezeichnet werden.

Die Schweißfugengeometrie des erfindungsgemäßen Verfahrens ist insbesondere dadurch gekennzeichnet, dass bei den zu verbindenden dickwandigen Werkstücken jetzt ein signifikanter Bereich des Schweißnahtquerschnitts allein durch das direkte Wirken des Laserstrahls in der Schweißprozesszone verbunden werden kann.

Dadurch können die spezifischen Vorteile des Laserschweißprozesses, wie hohe Schweißgeschwindigkeit, Tiefschweißeffekt und geringe Wärmebeeinflussung, optimal genutzt werden. Beispielsweise werden blechdickenabhängig Schweißgeschwindigkeiten von deutlich über 0,5 m/min erreicht.

Realisiert werden diese Vorteile durch die erfindungsgemäße Kombination verschiedener Schweißverfahren mit einer den qualitativen Anforderungen entsprechenden und auf das jeweilig angewandte Schweißverfahren abgestimmten Nahtvorbereitung.

Zum Einsatz kommen für den ersten Schweißbereich der Wurzellage spaltabhängig zunächst das Laserstrahlschweißen oder Laser-Lichtbogen-Hybridschweißen, wobei beim Laser-Lichtbogen-Hybridschweißen neben dem Laser- vorzugsweise das Metall-SchutzgasSchweißen (MSG) zur Anwendung kommt. Als günstig hat sich für die Nahtvorbereitung ein Stumpfstoß mit maximalen Spalten von 3 mm, vorteilhaft < 1,5 mm, herausgestellt.

Ein im Hinblick auf die mechanischen Anforderungen an die Schweißverbindung metallurgisch günstiger Effekt wird dann erreicht, wenn die Schweißgeschwindigkeit der auf die Wurzellage folgenden Schweißlage/en so eingestellt wird, dass ein Anlasseffekt der vorherigen Schweißlage/en erreicht wird.

Bei Wanddicken zwischen 8 und 15 mm wird die Schweißverbindung vorzugsweise nur mit zwei Schweißbereichen und mit jeweils einer Schweißlage hergestellt. Um einen vollständigen Anschluss des Querschnitts mit hoher Schweißgeschwindigkeit zu erreichen, ist die Nahtvorbereitung für den zweiten Schweißbereich V-förmig mit einem Öffnungswinkel von max. 70° oder tulpenförmig vorgesehen, wobei die Schweißung vorteilhaft als Laser-MSG-Hybridschweißung ausgeführt wird. Fallweise kann es aber auch vorteilhaft sein, alternativ das WIG- oder Plasmaschweißen anstelle des MSG-Teilschweißprozesses anzuwenden.

Bei Wanddicken oberhalb von 15 mm ist die Schweißverbindung vorteilhaft mit drei Schweißbereichen herzustellen, wobei für den ersten und zweiten Schweißbereich die gleiche Nahtvorbereitung vorgesehen wird wie bei geringeren Wanddicken und ebenfalls das Laser-MSG-Hybridschweißen eingesetzt wird.

Der dritte Schweißbereich weist ebenfalls eine tulpenförmige oder V-förmige Nahtvorbereitung auf. Der Öffnungswinkel der V-Naht ist für diesen Schweißbereich kleiner, als der Öffnungswinkel der V-Naht des zweiten Schweißbereiches. Der Öffnungswinkel hierfür beträgt vorteilhaft max. 60° bzw. an jeder Nahtflanke max. 30° (Flankenwinkel). Es ist aber auch möglich, die Nahtflanken mit unterschiedlichen Flankenwinkeln zu versehen, die dann eine unsymmetrische Öffnung der V-Naht ergeben.

Dieser Schweißbereich wird vorteilhaft mittels Laser-MSG-Hybridschweißen oder MSG allein mit einer Schweißlage oder mehreren Schweißlagen verschweißt. Vorteilhaft kann es zudem sein, den Schweißkopf oder die Schweißköpfe pendelnd beim Schweißen zu bewegen, um einen sicheren und fehlerfreien Nahtflankeneinbrand zu gewährleisten.

Als besonders günstig im Hinblick auf die Prozessgestaltung, wie z. B. die Strahlführung, hat sich der Einsatz fasergeführter Laserstrahlung bewährt.

Als besonders vorteilhaft hat sich eine Anpassung der Laserleistung beim Schweißen der Füll- und Decklagen herausgestellt.

Ein bekannter Effekt insbesondere beim Laser-MSG-Hybridschweißen ist die stabilisierende Wirkung, die der Laserstrahl auf den Lichtbogen ausüben kann. Durch die Kombination des Laserstrahls mit dem Lichtbogenprozess ist die Anwendung einiger Parameterkombinationen möglich, mit denen für eine alleinige konventioneller MSG-Schweißung kein stabiler Prozess erreicht werden kann. Dieser Effekt kann für alle Schweißbereiche für eine auf Wirtschaftlichkeit und Schweißnahtqualität ausgerichtete Parameteroptimierung genutzt werden.

Die Füll- und Decklagen können dementsprechend mittels Laser-MSG-Hybridschweißen ausgeführt werden, wobei zur Stabilisierung des Lichtbogens eine Laserleistung von mindestens 10% der Prozess-Gesamtleistung eingesetzt wird.

Ein weiterer positiver Effekt bezüglich der Vermeidung von Schweißnahtfehlem kann mittels Manipulation des Laserstrahls erreicht werden.

Ein wesentlicher Vorteil des Laserstrahls in Kombination mit einem MSG-Lichtbogen liegt in der dem Schmelzbad bzw. dem Schweißprozess zielgerichtet zugeführten Energie des Laserstrahls.

Hierdurch besteht die Möglichkeit Schweißnahtfehler, z. B. Bindefehler aufgrund ungünstiger Temperaturverteilungen, zu vermeiden. Dies kann insbesondere bei der Erstellung von Fülllagen in Zusammenhang mit entsprechend ungünstigen Nahtflankenwinkeln von Bedeutung sein.

Durch die zeitliche und örtliche Variation der Laserleistung innerhalb des Laser-MSG-Hybridschweißprozesses kann daher eine Erhöhung der Prozesssicherheit bzw. der Produktivität erzielt werden.

Insbesondere bei der Herstellung von Fülllagen kann durch die Manipulation des Laserstrahls eine räumliche und zeitliche Variation der dem Prozess zugeführten Laserstrahlleistung erreicht werden, so dass das Auftreten von Schweißnahtfehlem, z. B. von Bindefehlern im Nahtflankenbereich, reduziert werden kann.

Ein weiterer positiver Effekt beim Laser-Lichtbogen-Hybridschweißen bezüglich Fehlerminimierung kann erreicht werden, wenn der Anteil der in die Schweißverbindung eingebrachten Laserleistung an der eingebrachten Gesamtleistung im ersten Schweißbereich größer ist als im zweiten und/oder dritten Schweißbereich.

Vor dem Verschweißen werden die Rohre in der Regel mit einer Innenzentriervorrichtung positioniert und gespannt, um eine definierte Schweißposition und damit eine reproduzierbare qualitativ einwandfreie Schweißverbindung zu erreichen.

Bei der beispielsweise beim bekannten MSG-Schweißen verwendeten konventionellen wurzelseitigen Sicherung des Schweißbades mit einer als Kupferschuh ausgebildeten Badsicherungsvorrichtung wird die Wurzel über eine Ausnehmung im Schuh durch einen direkten Kontakt mit dem Schmelzbad geformt.

Der Kupferschuh ist zur Formung der durch Laserschweißen gebildeten Wurzel jedoch ungeeignet, da aufgrund der durch den Fügespalt transmittierenden Laserstrahlung von ca. 15 - 20% der eingebrachten Laserleistung eine metallurgisch ungünstige Kupferanschmelzung durch den Kontakt der Wurzel mit dem Kupferschuh auftreten würde.

Erfindungsgemäß ist der Kupferschuh deshalb dahingehend verändert, dass die Formung der Wurzel kontaktlos erfolgt und damit eine Kupferaufnahme in der Schmelze unterbleibt. Die Ausnehmung des Kupferschuhs ist dabei so ausgebildet, dass die transmittierende Laserstrahlung von der Ausnehmung zu der sich ausbildenden Wurzel zurück reflektiert wird und dabei die Wurzel und die angrenzenden Werkstoffbereiche aufschmilzt wodurch eine gleichmäßige kerbfreie Wurzelkontur erzielt wird.

Vorteilhaft kann es zudem sein, die Ausnehmung des Kupferschuhs während des Schweißens mit einem Prozessgas zu spülen. Prozessgase können inerte, aktive und/oder reduzierende Eigenschaften aufweisen, wodurch der Wärmeübergang in günstiger Weise beeinflusst und so eine gleichmäßige Ausformung der Wurzel unterstützt wird. Der Kupferschuh kann dabei ohne aktive Kühlung oder mit einer Kühlung vorzugsweise mit Wasser ausgestattet sein.

Die vom Kupferschuh reflektierte Laserstrahlung führt damit außer zu einer qualitativen Verbesserung der Nahtwurzel zu einer zusätzlichen Leistungssteigerung des Schweißprozesses.

Als besonders günstig hat sich herausgestellt, wenn die Ausnehmung eine die Laserstrahlung hoch reflektierende Oberfläche aufweist, z. B. durch Polieren der Oberfläche oder durch eine entsprechende Beschichtung.

Weitere Merkmale, Vorteile und Einzelheiten der Erfindung ergeben sich aus der nachfolgenden Beschreibung der dargestellten Figuren.

Es zeigen:
- **Figur 1**: einen prinzipiellen Aufbau der Schweißbereiche für Rohre mit Wanddicken von 8 bis 15 mm,
- **Figur 2**: wie Figur 1, jedoch für Wanddicken oberhalb von 15 mm,
- **Figur 3**: eine erfindungsgemäße als Kupferschuh ausgebildete Badsicherungsvorrichtung

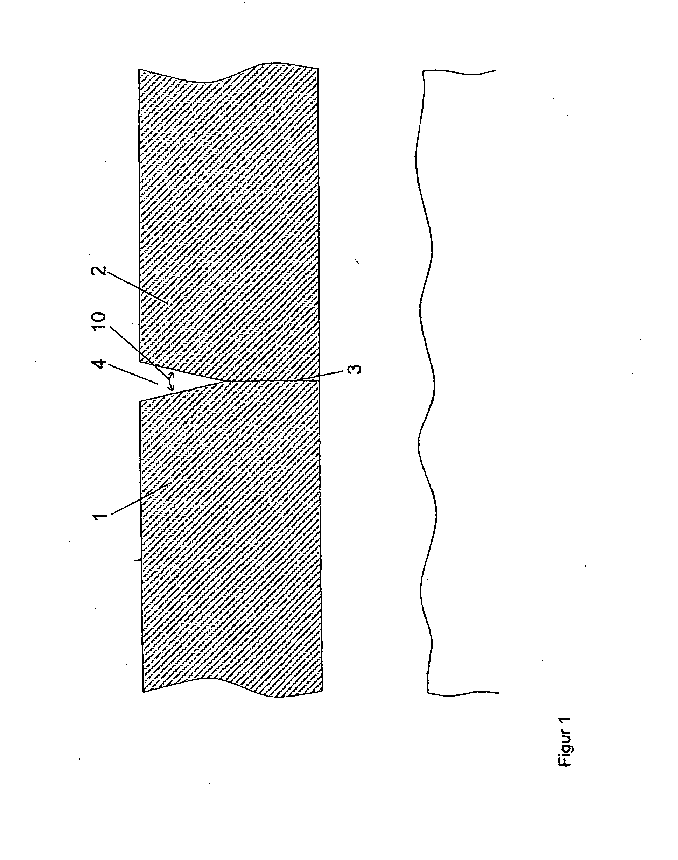

**Figur 1** zeigt den prinzipiellen Aufbau der Schweißbereiche und die Nahtvorbereitung als Y-Naht für das erfindungsgemäße Verfahren zum Schweißen dickwandiger Rohre im Wanddickenbereich von 8 bis 15 mm mit zwei Schweißbereichen.

Dargestellt sind Abschnitte von Rohren 1, 2, die im ersten Schweißbereich (Wurzellage) mit einem I-Stoß als Nahtvorbereitung 3 versehen sind, wobei in diesem Fall der Spalt annähernd Null ist.

Zum Einsatz kommen für die Wurzellage spaltabhängig zunächst das Laserstrahlschweißen oder Laser-Lichtbogen-Hybridschweißen, wobei beim Laser-Lichtbogen-Hybridschweißen neben dem Laser-, vorzugsweise das MSG-Schweißen als Teilprozess zur Anwendung kommt.

Bei Wanddicken zwischen 8 und 15 mm wird die Schweißverbindung vorzugsweise nur mit zwei Schweißbereichen mit jeweils einer Schweißlage hergestellt, wobei die zweite Lage als Fülllage dient. Um einen vollständigen Anschluss des Rohrquerschnitts mit hoher Schweißgeschwindigkeit zu erreichen, ist für den zweiten Schweißbereich als Nahtvorbereitung 4 eine V-Naht mit einem Öffnungswinkel 10 in diesem Fall von ca. 30° vorgesehen, wobei die Schweißung vorteilhaft als Laser-MSG-Hybridschweißung ausgeführt wird.

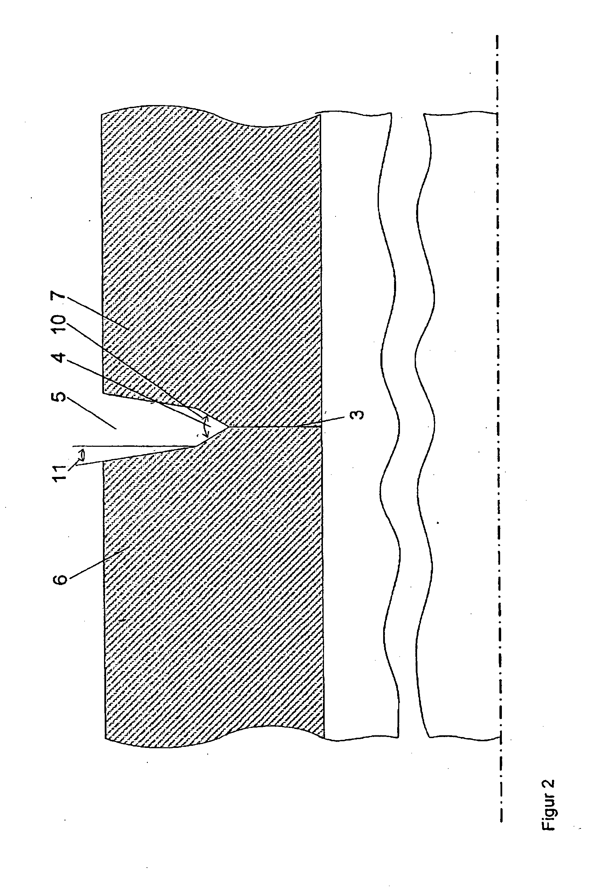

Bei Wanddicken oberhalb von 15 mm ist die Schweißverbindung der Rohre 6, 7 vorteilhaft mit drei Schweißbereichen herzustellen (Figur 2). Die Nahtvorbereitung 3 für den ersten Schweißbereich ist ebenfalls ein I-Stoß mit einem Spalt annähernd Null. Für den zweiten Schweißbereich ist als Nahtvorbereitung 4 eine V-Naht mit einem Öffnungswinkel von ca. 45° vorgesehen, wobei als Schweißverfahren ebenfalls vorteilhaft das Laser-MSG-Hybridschweißen oder alleiniges Lichtbogenschweißen eingesetzt wird.

Die Nahtvorbereitung 5 für den dritten Schweißbereich ist ebenfalls V-förmig ausgeführt mit einem Flankenwinkel 11 von max. 20°. Die Verschweißung erfolgt vorteilhaft ebenfalls mittels Laser-MSG-Hybridschweißen oder MSG allein in einer Schweißlage oder mehreren Schweißlagen.

Obwohl in den **Figuren 1** **und** **2** V-förmige Nahtvorbereitungen 4, 5 für den zweiten bzw. dritten Schweißbereich vorgesehen sind, kann alternativ hierfür auch eine tulpenförmige Nahtvorbereitung oder eine Kombination aus V- und tulpenförmiger Nahtvorbereitung eingesetzt werden.

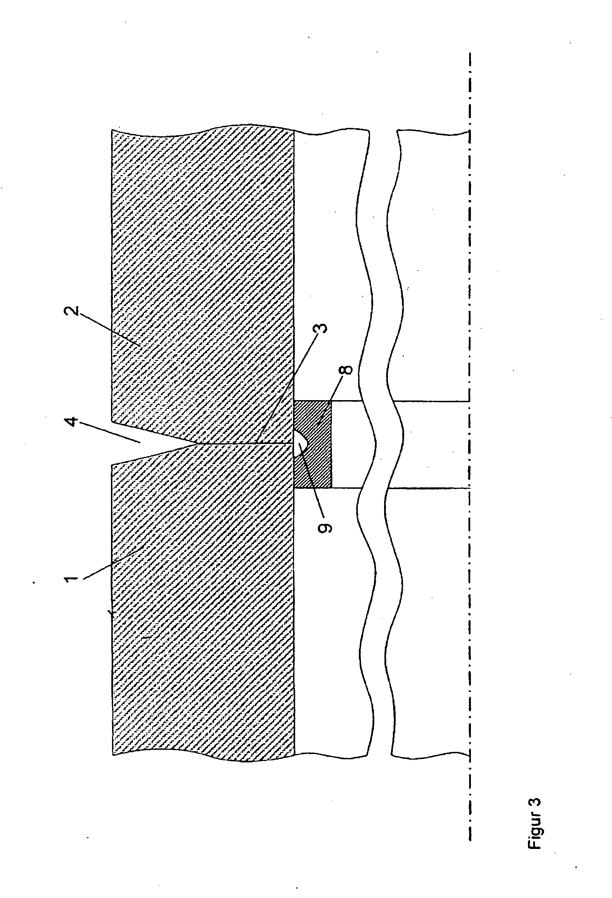

Eine Badsicherungsvorrichtung ist in **Figur 3** dargestellt. Für gleiche Teile wurden gleiche Bezugszeichen verwendet.

Die Nahtvorbereitung und die Verschweißung der Rohre 1, 2 wird wie bei Figur 1 beschrieben vorgenommen, so dass hier nicht weiter darauf eingegangen wird.

Zur Abstützung und Formung des hier nicht dargestellten Schmelzbades bei der Wurzelschweißung ist im Bereich des Schweißstoßes auf der Innenseite der Rohre 1, 2 eine Badsicherungsvorrichtung 8 vorgesehen, die mit einer Ausnehmung 9 zur kontaktlosen Aufnahme der in das Rohrinnere hineinragenden Schweißnahtwurzel versehen ist.

Die Ausnehmung 9 ist so ausgebildet, dass die bei der Laserstrahlschweißung durch die Wurzel transmittierende Laserstrahlung von der Ausnehmung 9 in Richtung der sich ausbildenden Nahtwurzel reflektiert wird und damit unmittelbar auf die äußere Formgebung und metallurgische Ausbildung der Wurzel einwirkt.

**Bezugszeichenliste**

| **Nr.** | **Bezeichnung** |
|---|---|
| 1,2 | Rohre im Dickenbereich 8 - 15 mm |
| 3 | Nahtvorbereitung 1. Schweißbereich |
| 4 | Nahtvorbereitung 2. Schweißbereich |
| 5 | Nahtvorbereitung 3. Schweißbereich |
| 6, 7 | Rohre im Dickenbereich > 15 mm |
| 8 | Badsicherungsvorrichtung |
| 9 | Ausnehmung |
| 10 | Öffnungswinkel Schweißbereich 2 |
| 11 | Flankenwinkel Schweißbereich 3 |

## Patentansprüche

1. Verfahren zum Verbinden dickwandiger metallischer Werkstücke mittels Schweißen, insbesondere von Rohren aus Stahl mit Wanddicken > 8 mm, insbesondere > 15 mm, *die mit mindestens* zwei Schweißlagen verbunden werden, wobei die zu verschweißenden Querschnitte zum vollflächigen Anschluss vor der Verschweißung in mindestens zwei Schweißbereichen mit einer Nahtvorbereitung versehen werden
wobei
zur Herstellung der Schweißverbindung die Querschnitte wanddickenabhängig mit höchstens drei Schweißbereichen versehen werden und die Schweißung aus einer kombinierten Anwendung der Schweißverfahren besteht, wobei im Hinblick auf die hohen qualitativen Anforderungen an die Schweißverbindung und hohe Schweißleistung der erste Schweißbereich (Wurzel) *durch* Laserstrahlschweißen oder Laser-Lichtbogen-Hybridschweißen, der zweite Schweißbereich *durch* Laser-Lichtbogen-Hybridschweißen und der blechdickenabhängig fallweise erforderliche dritte Schweißbereich *durch* Laser-Lichtbogen-Hybridschweißen oder alleinigem Lichtbogenschweißen verschweißt wird, **dadurch gekennzeichnet, dass** bei drei Schweißbereichen der zweite Schweißbereich alternativ auch *durch* alleiniges Lichtbogenschweißen verschweißt wird und die Schweißbereiche mit jeweils einer Schweißlage oder mehreren Schweißlagen in Ein- oder Mehrkopftechnik erstellt werden, dass die auf das jeweils angewandte Schweißverfahren abgestimmte Nahtvorbereitung so vorgenommen wird, dass für den ersten Schweißbereich ein I-Stoß mit einem maximalen Spalt von 3 mm, für den zweiten Schweißbereich eine V- oder tulpenförmige Nahtvorbereitung und für den dritten Schweißbereich eine V- oder tulpenförmige Nahtvorbereitung mit einem im Vergleich zur V-förmigen Nahtvorbereitung des zweiten Schweißbereiches verringerten Winkel bei einer V-förmigen Nahtvorbereitung vorgesehen wird, *und dass beim Laser-Lichtbogen-Hybridschweißen der Anteil der in die Schweißverbindung eingebrachten Laserleistung an der eingebrachten Gesamtleistung im ersten Schweißbereich größer ist als im zweiten und*/*oder dritten Schweißbereich und der Leistungsanteil des Lasers an der momentanen Schweißleistung mindestens 10% beträgt.*

2. Verfahren nach Anspruch 1
**dadurch gekennzeichnet,**
**dass** als Lichtbogenschweißverfahren das Metall-Schutzgasschweißen (MSG) eingesetzt wird.

3. Verfahren nach Anspruch 2
**dadurch gekennzeichnet,**
**dass** das MSG-Schweißen mittels Impulslichtbogentechnik ausgeführt wird.

4. Verfahren nach Anspruch 1
**dadurch gekennzeichnet,**
**dass** als Lichtbogenschweißverfahren das Wolfram-Inertgasschweißen (WIG) eingesetzt wird.

5. Verfahren nach Anspruch 1
**dadurch gekennzeichnet,**
**dass** als Lichtbogenschweißverfahren das Plasmaschweißen eingesetzt wird.

6. Verfahren nach einem der Ansprüche 1 - 3
**dadurch gekennzeichnet,**
**dass** der jeweils letzte zu schweißende Bereich mittels MSG-Schweißen oder Laser-Lichtbogen-Hybridschweißen erfolgt.

7. Verfahren nach einem der Ansprüche 1 - 6
**dadurch gekennzeichnet,**
**dass** die Schweißgeschwindigkeit/en der auf die Wurzellage folgenden Lage/Lagen so eingestellt wird/werden, dass ein Anlasseffekt der vorherigen Schweißlage/en erreicht wird.

8. Verfahren nach einem der Ansprüche 1 - 7
**dadurch gekennzeichnet,**
**dass** für den Spalt im Bereich des Stumpfstoßes ein maximaler Wert von 1,5 mg eingehalten wird.

9. Verfahren nach einem der Ansprüche 1 - 8
**dadurch gekennzeichnet,**
**dass** als Laserstrahlquelle ein Festkörper- oder Faserlaser mit Strahlleistungen im Multikilowattbereich eingesetzt wird.

10. Verfahren nach einem der Ansprüche 1 - 9
**dadurch gekennzeichnet,**
**dass** bei lasergeführten Prozessstufen Schweißgeschwindigkeiten größer 0,5 m/min eingesetzt werden

11. Verfahren nach einem der Ansprüche 1 - 10
**dadurch gekennzeichnet,**
**dass** vor dem Laser- oder Laser-Lichtbogen-Hybridschweißen der Wurzellage zur Badsicherung eine die Wurzel formende aber nicht kontaktierende Vorrichtung vorgesehen wird, die so ausgebildet ist, dass die bei der Laserschweißung durch die Wurzel transmittierende Laserstrahlung von einer in der Vorrichtung vorgesehenen Ausnehmung in Richtung des sich ausbildenden Nahtwurzelbereiches reflektiert wird.

12. Verfahren nach Anspruch 11
**dadurch gekennzeichnet,**
**dass** während des Schweißens die Ausnehmung mit einem Prozessgas gespült wird.

13. Verfahren nach Anspruch 12
**dadurch gekennzeichnet,**
**dass** das Prozessgas inerte, aktive und/oder reduzierende Eigenschaften aufweist.

14. Verfahren nach Anspruch 1
**dadurch gekennzeichnet,**
**dass** bei einer V-förmigen Nahtvorbereitung des zweiten Schweißbereiches der Öffnungswinkel max. 70° beträgt.

15. Verfahren nach Anspruch 1
**dadurch gekennzeichnet**
**dass** bei einer V-förmigen Nahtvorbereitung des dritten Schweißbereiches der Flankenwinkel max. 30° je Seite beträgt.

16. Verfahren nach Anspruch 15
**dadurch gekennzeichnet,**
**dass** die Flankenwinkel der zu verschweißenden Rohrenden ungleich sind.

## Claims

1. A method for connecting thick-walled metallic workpieces by means of welding, in particular of tubes made of steel with wall thicknesses of > 8 mm, in particular > 15 mm, which are connected with at least two weld runs, wherein the cross-sections to be welded, for joining over the full surface, are provided with a seam preparation in at least two welding areas before the welding,
wherein in order to produce the welded joint the cross-sections are provided, dependent on wall thickness, with at most three welding areas and the welding consists of a combined application of the welding processes, wherein with regard to the high demands in terms of quality made on the welded joint and high welding power the first welding area (root) is welded by laser-beam welding or laser/arc hybrid welding, the second welding area is welded by laser/arc hybrid welding and the third welding area, which may be necessary on a case-by-case basis dependent on the thickness of the metal sheet, is welded by laser/arc hybrid welding or arc welding alone, **characterised in that** in the case of three welding areas the second welding area alternatively is also welded solely by arc welding and the welding areas are produced by a single-head or multi-head technique with in each case one weld run or a plurality of weld runs, **in that** the seam preparation which is matched to the welding process applied in each case is carried out such that for the first welding area a square butt joint with a maximum gap of 3 mm, for the second welding area a V-shaped or U-shaped seam preparation and for the third welding area a V-shaped or U-shaped seam preparation with an angle which is reduced compared with the V-shaped seam preparation of the second welding area is provided for a V-shaped seam preparation, and **in that** in the case of the laser/arc hybrid welding the proportion of the laser power introduced into the welded joint in relation to the total power introduced in the first welding area is greater than in the second and/or third welding area and the proportion of the power of the laser in relation to the momentary welding power is at least 10%.

2. A method according to Claim 1, **characterised in that** gas metal arc welding (GMAW) is used as the arc welding process.

3. A method according to Claim 2, **characterised in that** the GMA welding is carried out by means of the pulsed arc technique.

4. A method according to Claim 1, **characterised in that** tungsten inert gas welding (TIG) is used as the arc welding process.

5. A method according to Claim 1, **characterised in that** plasma arc welding is used as the arc welding process.

6. A method according to one of Claims 1 - 3, **characterised in that** the last area which is to be welded in each case takes place [sic] by means of GMA welding or laser/arc hybrid welding.

7. A method according to one of Claims 1 - 6, **characterised in that** the welding speed(s) of the run(s) which follow the first run is/are set such that a tempering effect of the previous weld run(s) is achieved.

8. A method according to one of Claims 1 - 7, **characterised in that** a maximum value of 1.5 mm is maintained for the gap in the region of the butt joint.

9. A method according to one of Claims 1 - 8, **characterised in that** a solid-state laser or fibre laser with beam powers in the multi-kilowatt range is used as the laser-beam source.

10. A method according to one of Claims 1 - 9, **characterised in that** for laser-guided process stages welding speeds of greater than 0.5 m/min are used.

11. A method according to one of Claims 1-10, **characterised in that** prior to the laser welding or laser/arc hybrid welding of the first run a device which forms the root but is non-contacting is provided for securing the bath, which device is formed such that the laser radiation which is transmitted through the root during the laser welding is reflected in the direction of the seam root region which is forming by a recess provided in the device.

12. A method according to Claim 11, **characterised in that** during the welding the recess is flushed with a process gas.

13. A method according to Claim 12, **characterised in that** the process gas has inert, active and/or reducing properties.

14. A method according to Claim 1, **characterised in that** in the case of a V-shaped seam preparation of the second welding area the opening angle is max. 70°.

15. A method according to Claim 1, **characterised in that** in the case of a V-shaped seam preparation of the third welding area the flank angle is max. 30° per side.

16. A method according to Claim 15, **characterised in that** the flank angles of the tube ends to be welded are non-identical.

## Revendications

1. Procédé d'assemblage de pièces métalliques à parois épaisses par soudure, en particulier de tubes en acier avec des épaisseurs de paroi > 8 mm, en particulier > 15 mm qui sont assemblés avec au moins deux couches de soudure, les sections transversales à souder étant pourvues d'une préparation de soudure pour le raccordement sur toute la surface avant la soudure dans au moins deux zones à souder, pour l'établissement de la liaison soudée, les sections transversales étant pourvues de trois zones à souder au maximum en fonction de l'épaisseur de paroi et la soudure se composant d'une application combinée des procédés de soudure, la première zone à souder (base) étant soudée par soudure au rayon laser ou soudure hybride au laser et à l'arc, la deuxième zone à souder étant soudée par soudure hybride au laser et à l'arc et la troisième zone à souder, éventuellement requise selon l'épaisseur de tôle, étant soudée par soudure hybride au laser et à l'arc ou par soudure à l'arc seule en ce qui concerne les exigences élevées en termes de qualité de liaison soudée et haute puissance de soudage, **caractérisé en ce qu'**en cas de trois zones à souder, la deuxième zone à souder est également soudée en variante par soudure à l'arc seule et les zones à souder sont établies avec respectivement une couche de soudure ou plusieurs couches de soudure dans la technique à une ou plusieurs têtes, **en ce que** la préparation de soudure adaptée au procédé de soudure respectivement appliqué est entreprise de sorte que pour la première zone à souder, un joint en I avec une fente maximale de 3 mm soit prévu, pour la deuxième zone à souder une préparation de soudure en V ou en forme de tulipe soit prévue et pour la troisième zone à souder une préparation de soudure en V ou en forme de tulipe soit prévue avec un angle réduit par rapport à la préparation de soudure en V de la deuxième zone à souder pour une préparation de soudure en V, et **en ce que** pour la soudure hybride au laser et à l'arc la part de la puissance du laser introduite dans la liaison soudée sur la puissance entière introduite dans la première zone à souder est supérieure à celle de la deuxième et/ou troisième zone à souder et la part de puissance du laser sur la puissance de soudure momentanée s'élève au moins à 10%.

2. Procédé selon la revendication 1, **caractérisé en ce que** la soudure à l'arc sous protection gazeuse avec métal d'apport (MSG) est utilisée comme procédé de soudure à l'arc.

3. Procédé selon la revendication 2, **caractérisé en ce que** la soudure à l'arc sous protection gazeuse avec métal d'apport est réalisée à l'aide de la technique à arc pulsé.

4. Procédé selon la revendication 1, **caractérisé en ce que** la soudure au tungstène et au gaz inerte (WIG) est utilisée comme procédé de soudure à l'arc.

5. Procédé selon la revendication 1, **caractérisé en ce que** la soudure au plasma est utilisée comme procédé de soudure à l'arc.

6. Procédé selon l'une quelconque des revendications 1 à 3, **caractérisé en ce que** la dernière zone à souder respective est réalisée par soudure à l'arc sous protection gazeuse avec métal d'apport ou soudure hybride au laser et à l'arc.

7. Procédé selon l'une quelconque des revendications 1 à 6, **caractérisé en ce que** la/les vitesse(s) de soudure de la/des couche(s) suivant la couche de base est/sont réglée(s) de sorte qu'un effet de revenu de la couche/des couches de soudure précédentes soit obtenu.

8. Procédé selon l'une quelconque des revendications 1 à 7, **caractérisé en ce qu'**une valeur maximale de 1,5 mm est respectée pour la fente dans la zone du joint bout à bout.

9. Procédé selon l'une quelconque des revendications 1 à 8, **caractérisé en ce qu'**un laser à corps solide ou à fibre avec des puissances de faisceau dans le domaine du multikilowatt est utilisé comme source de rayon laser.

10. Procédé selon l'une quelconque des revendications 1 à 9, **caractérisé en ce que** des vitesses de soudure supérieures à 0,5 m/min sont utilisées pour des étapes de processus guidées par laser.

11. Procédé selon l'une quelconque des revendications 1 à 10, **caractérisé en ce qu'**un dispositif formant la base mais n'établissant pas de contact est prévu avant la soudure au laser ou soudure hybride au laser et à l'arc de la couche de base pour la sécurité du bain, lequel dispositif est réalisé de sorte que le rayonnement laser de transmission par la base lors de la soudure au laser soit réfléchi par un évidement prévu dans le dispositif en direction de la zone de base de soudure se formant.

12. Procédé selon la revendication 11, **caractérisé en ce que** l'évidement est rincé avec un gaz de processus pendant la soudure.

13. Procédé selon la revendication 12, **caractérisé en ce que** le gaz de processus présente des propriétés inertes, actives et/ou réductrices.

14. Procédé selon la revendication 1, **caractérisé en ce que** l'angle d'ouverture s'élève à 70° maximum pour une préparation de soudure en V de la deuxième zone à souder.

15. Procédé selon la revendication 1, **caractérisé en ce que** l'angle de flanc s'élève à 30° maximum par côté pour une préparation de soudure en V de la troisième zone à souder.

16. Procédé selon la revendication 15, **caractérisé en ce que** les angles de flanc des extrémités de tube à souder sont inégaux.
